# EUROPÄISCHE PATENTSCHRIFT

(11) **EP 2 033 165 B1**
(45) Veröffentlichungstag und Bekanntmachung des Hinweises auf die Patenterteilung: **11.07.2018**
(21) Anmeldenummer: 07729449.4
(22) Anmeldetag: 23.05.2007
(51) Int. Cl.: G06T 7/20

(54) **VERFAHREN FÜR DIE ERFASSUNG EINES VERKEHRSRAUMS**
METHOD FOR PICKING UP A TRAFFIC SPACE
PROCEDE POUR LA DETECTION D'UN ESPACE DE CIRCULATION

(30) Priorität: 12.06.2006 DE 102006027123
(43) Veröffentlichungstag der Anmeldung: 11.03.2009
(73) Patentinhaber: Robert Bosch GmbH, 70442 Stuttgart (DE)
(72) Erfinder: STEIN, Fridtjof, 73760 Ostfildern (DE)
(86) Internationale Anmeldenummer: PCT/EP2007/055014
(87) Internationale Veröffentlichungsnummer: WO 2007/144250

(56) Entgegenhaltungen:
- EP-A- 1 047 019
- US-A- 5 500 904
- GIACHETTI A ET AL: "Dynamic segmentation of traffic scenes" INTELLIGENT VEHICLES '95 SYMPOSIUM., PROCEEDINGS OF THE DETROIT, MI, USA 25-26 SEPT. 1995, NEW YORK, NY, USA,IEEE, US, 25. September 1995 (1995-09-25), Seiten 258-263, XP010194126 ISBN: 0-7803-2983-X
- NICOLESCU M ET AL: "Motion segmentation with accurate boundaries - a tensor voting approach" PROCEEDINGS 2003 IEEE CONFERENCE ON COMPUTER VISION AND PATTERN RECOGNITION. CVPR 2003. MADISON, WI, JUNE 18 - 20, 2003, PROCEEDINGS OF THE IEEE COMPUTER CONFERENCE ON COMPUTER VISION AND PATTERN RECOGNITION, LOS ALAMITOS, CA, IEEE COMP. SOC, US, Bd. VOL. 2 OF 2, 18. Juni 2003 (2003-06-18), Seiten 382-389, XP010644923 ISBN: 0-7695-1900-8
- WEI J ET AL: "MRF-MAP-MFT visual object segmentation based on motion boundary field" PATTERN RECOGNITION LETTERS, NORTH-HOLLAND PUBL. AMSTERDAM, NL, Bd. 24, Nr. 16, Dezember 2003 (2003-12), Seiten 3125-3139, XP004463273 ISSN: 0167-8655

## Beschreibung

### Stand der Technik

Die Erfindung betrifft ein Verfahren für die Erfassung eines Verkehrsraums nach dem Oberbegriff des Anspruchs 1.

Verfahren für die Erfassung des Verkehrsraums mit Hilfe von Fahrerassistenzsystemen zugeordneten Bildsensoren werden in zunehmendem Umfang in modernen Fahrzeugen eingesetzt. Diese Fahrerassistenzsysteme unterstützen den Fahrer zum Beispiel bei der Einhaltung der gewählten Fahrspur, bei einem beabsichtigten Spurwechsel, bei der Einhaltung des Sicherheitsabstands zu vorausfahrenden Fahrzeugen und bei der Fahrt unter schlechten Sichtbedingungen, wie beispielsweise bei Nacht oder bei schlechtem Wetter. Häufig werden Assistenzfunktionen wie LDW (Lane Departure Warning), LKS (Lane Keeping Support), LCA (Lane Change Assistant) und ACC (Automatic Cruise Control) implementiert. Um das Fahrzeugumfeld zu erfassen, ist in einem derartigen Fahrerassistenzsystem wenigstens ein Bildsensor vorgesehen. Als Bildsensor wird bevorzugt eine Videokamera in CCD- oder CMOS-Technik eingesetzt, die typischerweise mit Blickrichtung nach vorn in das Fahrzeug eingebaut ist. Aus Kostengründen werden dabei vorwiegend Monokameras eingesetzt. Da Monokameras aber nur ein zweidimensionales Abbild des Fahrzeugumfelds liefern, sind dreidimensionale Strukturen nicht ohne weiteres aus den von der Monokamera bereitgestellten Videosignalen zu extrahieren. Es wird dazu bisher immer eine Modellbetrachtung benötigt, um dreidimensionale Objekte, wie beispielsweise andere Fahrzeuge, Verkehrszeichen, Fußgänger, den Straßenverlauf, usw., zu detektieren. Betrachtet man nun nicht nur ein Bild, sondern mehrere zeitlich aufeinander folgende Bilder der Monokamera, also eine so genannte Bildsequenz, so ergeben die dabei feststellbaren Verschiebungen in aufeinander folgenden Bildern Aufschluss über die dreidimensionale Anordnung der Objekte in dem Fahrzeugumfeld. Eine derartige Vermessung ist allerdings nur bis auf eine Skalierung genau. So ist beispielsweise die Unterscheidung, ob sich ein weit entferntes Objekt schnell bewegt, oder ob sich ein in der Nähe befindliches Objekt langsam bewegt, nicht ohne weiteres lösbar, da beide Objekte auf dem Bildsensor die gleiche Information hinterlassen.

Es sind bereits wissenschaftliche Untersuchungen bekannt, die sich mit der Aufgabe befassen, räumliche Informationen aus einer Bildfolge von zweidimensionalen Bildern abzuleiten:
Spoerri, Anselm:
   The early Detection of Motion Boundaries, Technical Report 1275, MIT Artificial Intelligence Laboratory;
Black, M.J., and Fleet, D.J.: Probabilistic Detection and Tracking of Motion Discontinuities International Conference on Computer Vision 1999, Corfu, Greece;
H.-H. Nagel, G. Socher, H. Kollnig, and M. Otte: Motion Boundary Detection in Image Sequences by Local Stochastic Tests. Proc. Third European Conference on Computer Vision (ECCV '94), 2-6 May 1994, Stockholm/Sweden, J.-O. Eklundh (Ed.), Lecture Notes n Computer Science 801 (Vol.II), Springer-Verlag Berlin, Heidelberg, New York 1994, pp. 305-315.

Die meisten dieser bekannten Vorschläge sind weder echtzeitfähig noch robust genug für fahrzeugtechnische Anwendungen. Vielfach werden auch vereinfachende Annahmen gemacht, zum Beispiel werden eigenbewegte Objekte in der Bildszene ausgeschlossen, die so in der Praxis für eine Fahrzeugumgebung nicht zutreffen. Aus DE 4332612 A1 ist weiterhin ein Außenansichtsverfahren für Kraftfahrzeuge bekannt, das durch folgende Schritte gekennzeichnet ist: Aufnahme einer Außenansicht vom eigenen Kraftfahrzeug des Fahrers aus, welches sich bewegt, Erfassung einer Bewegung eines einzelnen Punktes in zwei Bildern als ein optischer Fluss, wobei eines der beiden Bilder zu einem früheren Zeitpunkt und das andere der beiden Bilder zu einem späteren Zeitpunkt aufgenommen wird; und Überwachung einer Korrelation des eigenen Kraftfahrzeugs des Fahrers bezüglich zumindest entweder einem vorausfahrenden Kraftfahrzeug, oder einem Hindernis auf der Straße, wobei eine Gefahrenrate beurteilt wird in Abhängigkeit von einer Größe und einem Ort eines Vektors eines optischen Flusses, der von einem Punkt auf zumindest entweder dem vorausfahrenden Kraftfahrzeug, dem hinterherfahrenden Kraftfahrzeug oder dem Hindernis auf der Straße abgeleitet wird. Unter Berücksichtigung der Tatsache, dass der optische Fluss desto größer wirdje kleiner die Entfernung zwischen dem eigenen Fahrzeug des Fahrers und dem vorausfahrenden Kraftfahrzeug oder Hindernis ist, oder je größer die Relativgeschwindigkeit ist, so ist dieses bekannte Verfahren so ausgelegt, dass die Gefahr von der Größe eines optischen Flusses her beurteilt werden kann, der von einem Punkt auf einem vorausfahrenden Kraftfahrzeug oder einem Hindernis auf der Straße abgeleitet wird.

Die wissenschaftliche Publikation GIACHETTI A ET AL: "Dynamic segmentation of traffic scenes" INTELLIGENT VEHICLES '95 SYMPOSIUM., PROCEEDINGS OF THE DETROIT , MI, USA 25-26 SEPT. 1995, NEW YORK, NY, USA,IEEE, US, 25. September 1995 (1995-09-25), Seiten 258-263, XPOI0194126 ISBN: 0-7803 offenbart einedynamsiche Segmentation von Verkehrsszenen.

Die wissenschaftliche Publikation NICOLESCU MET AL: "Motion segmentation with accurate boundaries - a tensor voting approach" PROCEEDINGS 2003 IEEE CONFERENCE ON COMPUTER VISION AND PATTERN RECOGNITION. CVPR 2003. MADISON, WI, JUNE 18 - 20, 2003, PROCEEDINGS OF THE IEEE COMPUTER CONFERENCE ON COMPUTER VISION AND PATTERN RECOGNITION, LOS ALAMITOS, CA, IEEE CaMP. SOC, US, Bd. VOI. 2 OF 2, 18. Juni 2003 (2003-06-18), Seiten 382-389, offenbart eine Bewegungssegmentierung mit genauen Grenzen unter Verwendung eines Tensor-Ansatzes. Die EP 1 047 019 A offenbart ein Verfahren zur Schätzung eines optischen Flusses.

Die US 5 500 904 A offenbart ein System und eine Verfahren zum Aufzeigen einer Veränderung zwischen Bildern.

### Offenbarung der Erfindung

### Vorteilhafte Wirkungen

Die erfindungsgemäße Lösung mit den Merkmalen des Anspruchs 1 vermeidet die Nachteile der bekannten Lösungen. Sie ist echtzeitfähig und robust und eignet sich daher in besonderer Weise für fahrzeugtechnische Anwendungen mit schnell wechselnden Bildinhalten. Da zukünftige Fahrerassistenzsysteme dem Fahrer nicht nur ein Bild der Fahrzeugumgebung wiedergeben, sondern auch zusätzliche Informationen und Warnungen vermitteln sollen, eignet sich die erfindungsgemäße Lösung besonders gut fur den Einsatz in solchen Systemen. Sie ermöglicht nämlich die Detektion statischer und bewegter Hindernisse aus dem Bildstrom und die Segmentation des Bildes in Straßen, interessierende statische und bewegte Objekte und sonstige Merkmale. Besonders vorteilhaft können beispielsweise Baken als statische Objekte in den Bildern erkannt werden. Damit besteht die Möglichkeit, eine Spurerkennungsfunktion des Fahrerassistenzsystems entsprechend zu parametrieren, um die besonders kritische Baustellensituation besser erkennen zu können. Weiterhin können als statische Objekte detektierte Leitpfosten eine Spurftihrungsfunktion des Fahrerassistenzsystems vorteilhaft unterstützen, falls keine gut erkennbaren Markierungen auf der Fahrbahn vorhanden sind.

spielsweise Baken als statische Objekte in den Bildern erkannt werden. Damit besteht die Möglichkeit, eine Spurerkennungsfunktion des Fahrerassistenzsystems entsprechend zu parametrieren, um die besonders kritische Baustellensituation besser erkennen zu können. Weiterhin können als statische Objekte detektierte Leitpfosten eine Spurführungsfunktion des Fahrerassistenzsystems vorteilhaft unterstützen, falls keine gut erkennbaren Markierungen auf der Fahrbahn vorhanden sind. Die Detektion sich bewegender Objekte und deren Einblendung in das vom Fahrer betrachtete Display ermöglicht eine besonders effektive Warnung auch bei schlechten Sichtverhältnissen, wie insbesondere bei Nachtfahrt. Der segmentierte Straßenverlauf erlaubt, basierend auf einer Flussanalyse, eine exakte Bestimmung der Eigenbewegung des Fahrzeugs. Dadurch können an Bord befindliche andere Sensoren in ihrer Vermessungsgenauigkeit unterstützt werden. Beispielsweise kann dadurch bei einem Gierratensensor die Drift kompensiert werden. Besonders vorteilhaft kann mittels der Erfindung auch die Geländebeschaffenheit entlang der Fahrbahn modellmäßig erfasst werden. Beispielsweise kann damit erkannt werden, ob entlang des Fahrbahnrandes ein Graben verläuft oder ob die Straße von einem Steilhang begrenzt ist. Diese Fakten können bei einem ggf. notwendigen Ausweichmanöver von großer Bedeutung sein, um das Risiko eines solchen Manövers abzuschätzen. Hieraus ergeben sich wertvolle Zusatzfunktionen für künftige Fahrerassistenzsysteme. So kann beispielsweise bei der Unterstützungsfunktion LDW(Lane Departure Warning) oder bei einer Ausweichempfehlung im Gefahrenfall das an die Fahrbahn angrenzende Geländeprofil berücksichtigt werden.

Weiterhin ist die erfindungsgemäße Lösung mit Vorteil auch bei hoch entwickelten Insassenschutzsystemen mit Precrashfunktion einsetzbar. Selbstverständlich kann die Erfindung auch bei Kameras eingesetzt werden, die seitlich oder im Heck des Fahrzeugs angeordnet sind, um Bilder aus diesen Bereichen des Fahrzeugumfelds zu erfassen.

### Kurze Beschreibung der Zeichnungen

Ausführungsformen der Erfindung werden nachfolgend unter Bezug auf die Zeichnung näher erläutert. Dabei zeigt:
- Figur 1: ein vereinfachtes schematisches Blockdiagramm eines Fahrerassistenzsystems;
- Figur 2: die Darstellung von zeitlich gestaffelten Bildern eines Bildsensors;
- Figur 3: ein Flussdiagramm mit Verfahrensschritten;
- Figur 4: ein von einem Bildsensor erfasstes Bild eines Verkehrsraums;
- Figur 5: aus dem Bild von Figur 4 abgeleitete Flusslinien (ISO-Flusslinien) des optischen Flusses;
- Figur 6: eine erste Darstellung eines Nightview-Bildes;
- Figur 7: eine zweite Darstellung eines Nightview-Bildes;
- Figur 8: ein Bild eines Bildsensors mit eingeblendeten ISO-Flusslinien;
- Figur 9: ein Bild eines Bildsensors mit eingeblendeten ISO-Flusslinien;
- Figur 10: ein Bild eines Bildsensors mit eingeblendeten ISO-Flusslinien;
- Figur 11: ein Bild eines Bildsensors mit eingeblendeten ISO-Flusslinien;
- Figur 12: ein Bild eines Bildsensors mit eingeblendeten ISO-Flusslinien;
- Figur 13: ein Bild eines Bildsensors mit eingeblendeten ISO-Flusslinien;
- Figur 14: ein Bild eines Bildsensors mit eingeblendeten ISO-Flusslinien;
- Figur 15: ein Bild eines Bildsensors mit eingeblendeten ISO-Flusslinien.

### Ausführungsformen der Erfindung

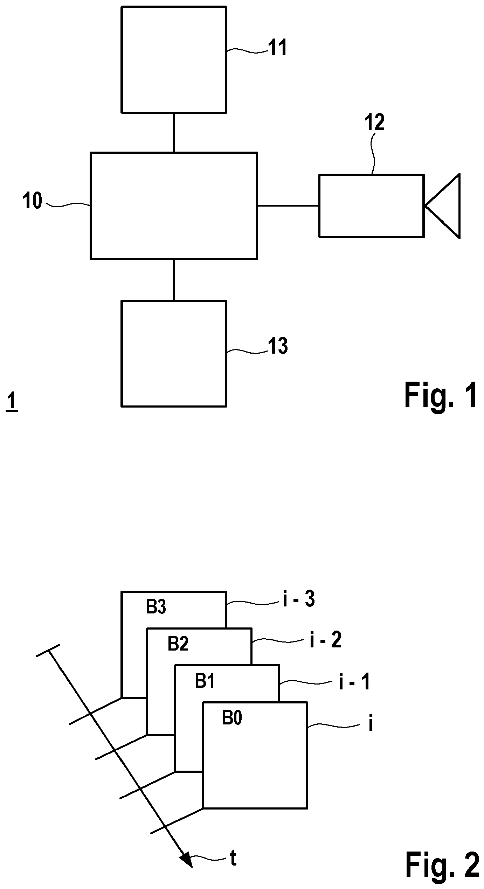

Die Erfindung findet bei einem Fahrassistenzsystem Anwendung, das in einem Kraftfahrzeug für die Unterstützung des Fahrers vorgesehen ist. Ein vereinfachtes schematisches Blockdiagramm eines derartigen Fahrerassistenzsystems ist in Figur 1 dargestellt. Das Fahrerassistenzsystem 1 umfasst mindestens einen monokularen Bildsensor 12 für die Erfassung des von dem Kraftfahrzeug befahrenen Verkehrsraums. Bei diesem Bildsensor 12 handelt es sich beispielsweise um eine auf CCD-Technik oder CMOS-Technik basierende Kamera. Neben dem Bildsensor 12 können zahlreiche weitere Sensoren vorgesehen sein, wie beispielsweise Radar- Lidar- oder Ultraschallsensoren, die jedoch in Figur 1 nicht im Einzelnen dargestellt sondern durch den Block repräsentiert sind. Der Bildsensor 12 ist mit einem Steuergerät 10 verbunden. Auch die weiteren Sensoren (Block 11) sind mit dem Steuergerät 10 verbunden. Das Steuergerät 10 verarbeitet die Signale der Sensoren. Weiterhin ist mit dem Steuergerät 10 ein Funktionsmodul verbunden, das insbesondere das Fahrerassistenzsystem 1 mit weiteren Systemen des Fahrzeugs verbindet. Beispielsweise ist zur Umsetzung der LDW-Funktion (LDW = Lane Departure Warning) eine Verbindung des Fahrerassistenzsystems 1 zu Warnsystemen des Fahrzeugs erforderlich. Für die Umsetzung der LKS-Funktion (Lane Keeping Support) kann eine Verbindung zu dem Lenksystem des Fahrzeugs erforderlich sein. Anstelle eines aufwendigen Stereosystems wird aus Kostengründen in einem Fahrerassistenzsystem häufig nur ein monokularer Bildsensor 12 vorgesehen. Der Bildsensor 12 ist typischerweise mit Blickrichtung nach vorn in dem Fahrzeug eingebaut und erfasst somit vorzugsweise den vor dem Fahrzeug liegenden Bereich des Verkehrsraums. Der Bildsensor 12 kann auch über eine Nachtsichtfähigkeit verfügen, um die Sichtmöglichkeit bei Dunkelheit und schlechten Witterungsbedingungen zu verbessern. Ein Nachteil monokularer Bildsensoren besteht darin, dass dreidimensionale Strukturen aus den von dem Bildsensor gelieferten Bildern nicht ohne weiteres extrahiert werden können. Es ist dazu immer ein in das Fahrerassistenzsystem implementiertes Modellwissen erforderlich, um aus in monokularen Bildern dreidimensionale Objekte aus dem Verkehrsraum, wie beispielsweise fremde Fahrzeuge, Verkehrszeichen, Fußgänger, und dergleichen zu detektieren. Betrachtet man nicht nur ein monokulares Bild, sondern so genannte, aus mehreren Bildern bestehende Bildfolgen, dann können von Bild zu Bild auftretende Verschiebungen Aufschluss über das Vorhandensein und die örtliche Lage dreidimensionaler Objekte geben. Figur 2 zeigt beispielsweise eine derartige Bildfolge von Bildern B0, B1, B2, B3, entlang einer Zeitachse t, die zu verschiedenen Zeitpunkten i, i-1, i-2, i-3, gewonnen worden sind. Die Vermessung von Objekten in diesen Bildern ist allerdings nur bis auf eine Skalierung genau. Die Unterscheidung, ob sich ein weit entferntes Objekt schnell oder ein nahes Objekt langsam bewegt, lässt sich nicht ohne weiteres treffen, da sie beide auf dem Bildsensor 12 die gleiche Information hinterlassen. Hier setzt nun die erfinderische Lösung an, die auf einer Analyse des aus den Bildern abgeleiteten optischen Flusses oder Bildflusses beruht.

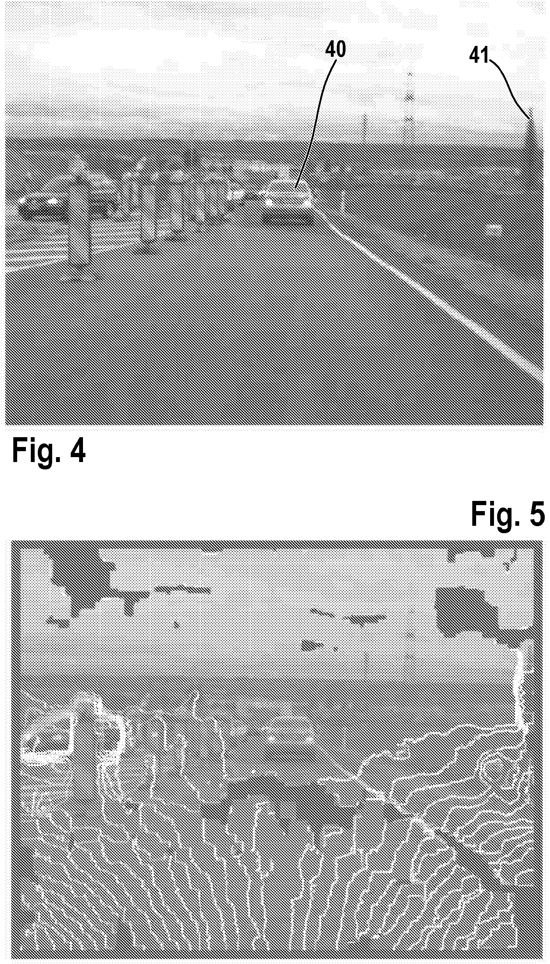

Ein wesentlicher Schritt bei der Analyse des Bildflusses besteht in der Segmentierung des Bildes. Die vorliegende Erfindung befasst sich mit einer solchen Segmentierung, die auf Diskontinuitäten im optischen Fluss beruht. Diese Diskontinuitäten werden im Folgenden als Flusskanten bezeichnet. Diese Flusskanten treten besonders an erhabenen Objekten auf. Dies wird im Folgenden unter Bezug auf Figur 4 und Figur 5 weiter erläutert. Figur 4 zeigt ein von dem Bildsensor 12 aufgenommenes monokulares Bild eines Verkehrsraum, in dem sich das mit dem Fahrerassistenzsystem 1 ausgerüstete Fahrzeug (Egofahrzeug) fortbewegt. Da der Bildsensor 12 als vorausschauender Sensor installiert ist, zeigt das in Figur 4 dargestellte Bild den Straßenverlauf in Fahrtrichtung des Egofahrzeugs. Das Egofahrzeug folgt offensichtlich gerade im Bereich einer durch Baken gesicherten Baustelle einem vorausfahrenden Fremdfahrzeug. Auf der Gegenspur nähern sich Fahrzeuge im Gegenverkehr. Auf der rechten Seite der eigenen Fahrspur ist ein Baum 41 erkennbar. Auch Figur 5 zeigt wiederum ein von dem Bildsensor 12 erfasstes Bild des Verkehrsraums, wobei jetzt zusätzlich aus den monokularen Bildern abgeleitete Flusslinien (ISO-Flusslinien) des optischen Flusses eingeblendet sind, die hier als dünn eingezeichnete unregelmäßige Linien dargestellt sind. Von besonderem Interesse sind Diskontinuitäten des optischen Flusses, die üblicherweise an erhabenen Objekten auftreten, insbesondere dann, wenn sie gehäuft auftreten. Dies ist in Bild 5 insbesondere an den Baken links und an dem Baum rechts der Fall. Diese Bereiche werden als Flusskanten bezeichnet. Mangels entsprechender Struktur sind in dem Bereich des Himmels keine Flussinformationen vorhanden. In dem Zentrum des Bildes befindet sich der so genannte FOE (Focus of Expansion). Hierbei handelt es sich um einen Punkt, aus dessen näherer Umgebung keine zuverlässige 3D-Information extrahierbar ist. Deshalb ist in dem Flussbild auch das vor dem Egofahrzeug fahrende Fahrzeug nicht sichtbar.

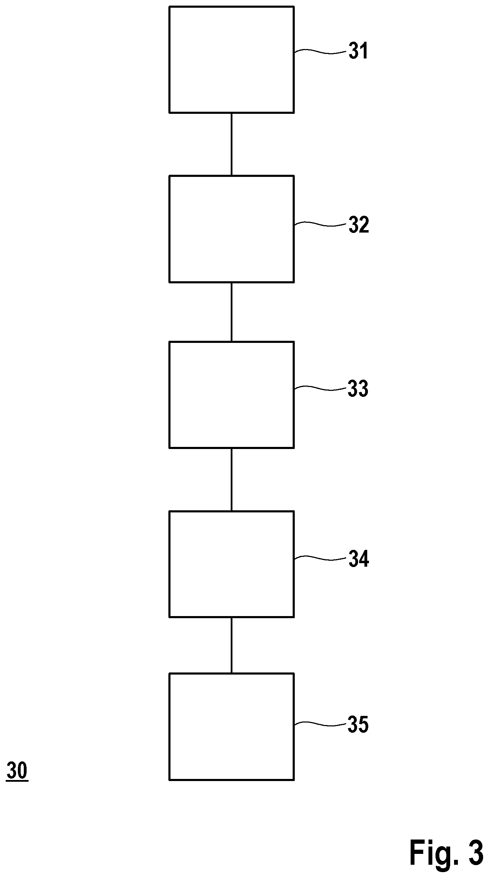

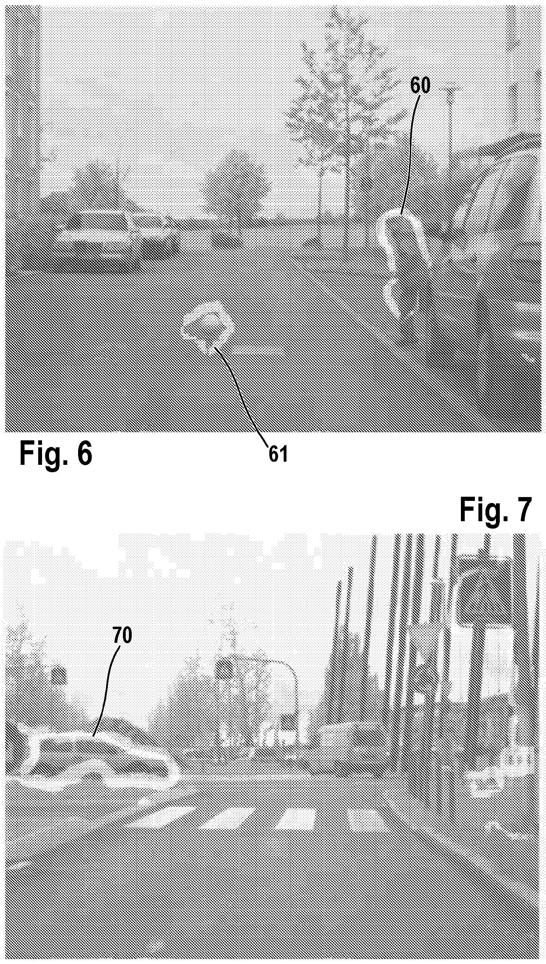

Anhand des einfachen, in Figur 3 dargestellten Flussdiagramms werden im Folgenden nochmals die gemäß dem erfinderischen Verfahren durchgeführten Schritte zusammengefasst. In einem ersten Schritt werden mittels des Bildsensors 12 monokulare Bilder des Verkehrsraums generiert. In einem zweiten Schritt 32 wird aus diesen Bildern der optische Fluss extrahiert. In einem dritten Schritt 33 wird der optische Fluss auf Diskontinuitäten untersucht. In einem weiteren Schritt 34 findet, auf Basis der entdeckten Diskontinuitäten des optischen Flusses, eine Segmentierung des Bildes statt. Durch diese Segmentierung können Objekte des Verkehrsraums klassifiziert werden. Zu diesen Objekten gehören eigenbewegte Objekte, wie beispielsweise andere Verkehrsteilnehmer, statische Objekte, wie beispielsweise verkehrslenkende Einrichtungen (siehe Baken und Verkehrszeichen) oder auch die Straße selbst und an die Straße angrenzende Geländebereiche. In einem weiteren Schritt 35 kann, ggf. in Abhängigkeit von einer Risikobewertung aufgrund der Analyse von Diskontinuitäten des optischen Flusses, eine Steuerung des Fahrzeugs oder dessen Systeme stattfinden. Beispielsweise kann nach der Erfassung der in Figur 4 und Figur 5 dargestellten Baken der Gefahrenbereich Baustelle erkannt werden. Durch Eingriff in das Bremssystem und/oder den Antriebsstrang des Fahrzeugs kann dann eine angepasste Geschwindigkeit des Fahrzeugs eingestellt werden, um die Baustellensituation risikolos zu meistern. Weiterhin können mittels der Erfindung detektierte Leitpfosten eine sichere Spurführung des Fahrzeugs selbst dann unterstützen, wenn keine deutlich erkennbaren Spurmarkierungen mehr vorhanden sein sollten. Auch Verkehrszeichen sind auf diese Weise erkennbar. Eigenbewegte Objekte aus dem Verkehrsraum zeichnen sich dadurch aus, dass die ihnen zugeordneten Diskontinuitäten des optischen Flusses ihre örtliche Lage in Abhängigkeit von der Zeit verändern. Diese Eigenschaft wird bei der Segmentierung der Bilder ausgenutzt, um eigenbewegte Objekte von statischen Objekten zu unterscheiden. Erkannte eigenbewegte Objekte ermöglichen auf vorteilhafte Weise eine Gefahrenwarnung, beispielsweise durch Einblendung in ein Nightview-Bild eines nachtsichtfähigen Fahrerassistenzsystems 1. Zwei Beispiele dafür sind in Figur 6 und Figur 7 dargestellt. Figur 6 zeigt ein Nightview-Bild und, in dieses eingeblendet, ein mit einem Ball spielendes Kind, das von der rechten Seite der Fahrspur vor das Egofahrzeug springt. Figur 7 zeigt in einem Nightview-Bild eine Kreuzung mit einem sich im kreuzenden Verkehr der Kreuzung nähernden Fremdfahrzeug.

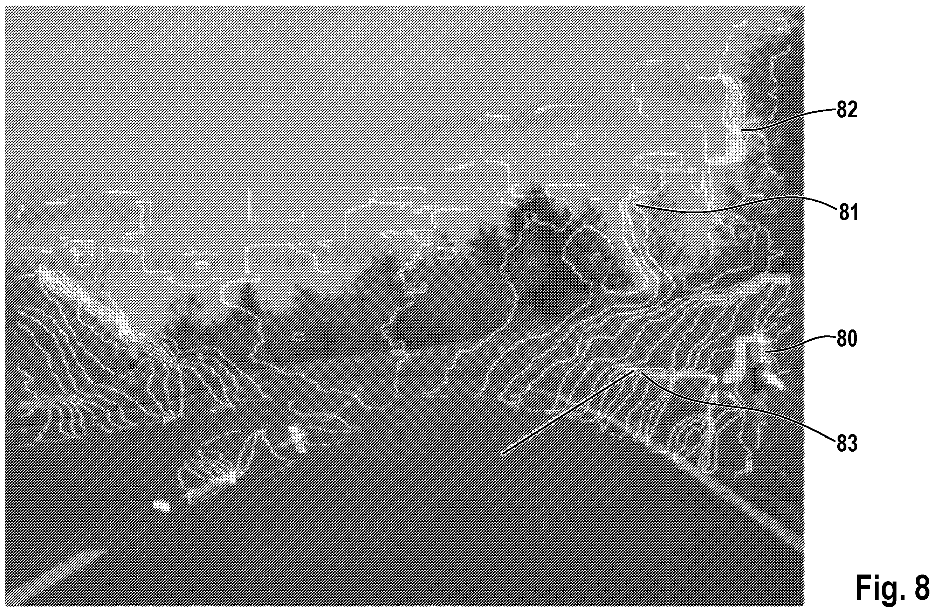

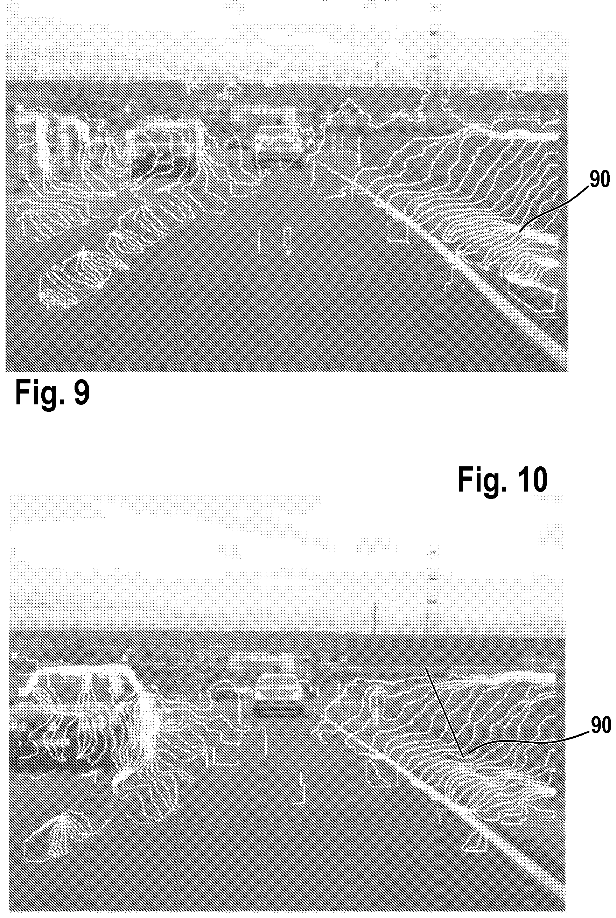

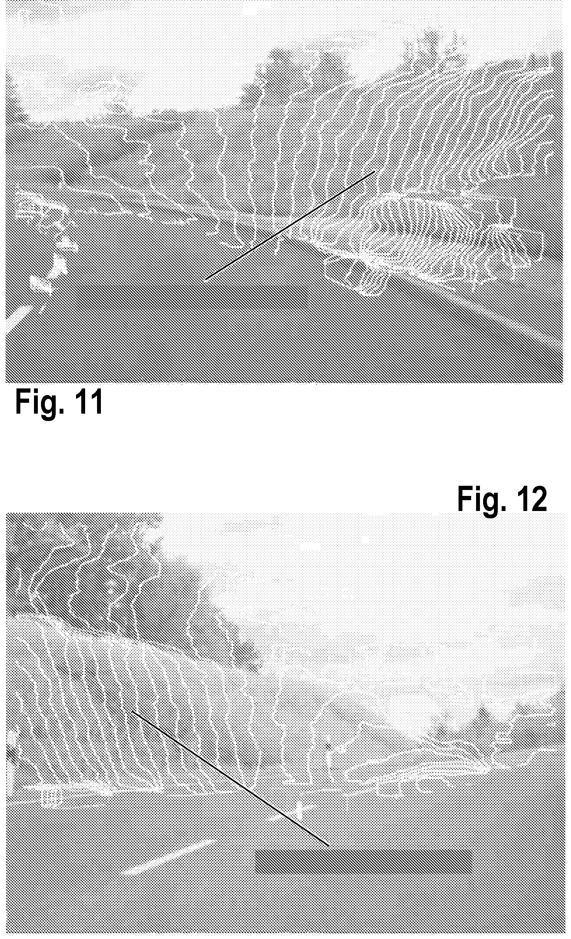

Abgesehen von den Verkehr leitenden Einrichtungen, wie Verkehrszeichen, Leitpfosten und dergleichen, können mit Hilfe des erfindungsgemäßen Verfahrens auch eine Randbebauung, den Straßenverlauf begleitende Vegetation und sogar an die Straße angrenzende Geländformationen erkannt und für eine zweckentsprechende Reaktion des Fahrerassistenzsystems verwertet werden. So zeigt als weiteres Beispiel Figur 8 ein Bild eines Bildsensors mit eingeblendeten ISO-Flusslinien des optischen Flusses und dort erkennbaren Diskontinuitäten des optischen Flusses. Das in Figur 8 gezeigte Bild stellt eine mit einer Linkskurve verlaufende Straße dar. Besonders auffallende Flusskanten finden sich bei einem Leitpfosten rechts im Vordergrund, bei Bäumen 81, 82 in der Randbepflanzung und bei einem als Abhang 83 gestalteten Geländeabschnitt rechts der Straße. In Figur 9 und Figur 10 sind Bilder dargestellt und Diskontinuitäten des optischen Flusses, die auf einen die abgebildete Straße rechts begrenzenden Graben schließen lassen. Die in Figur 11 und Figur 12 dargestellten Bilder und mit Diskontinuitäten des optischen Flusses zeigen jeweils einen Straßenverlauf mit steil abfallenden Abhängen, die die Straße rechts bzw. links begrenzen. Das Erkennen solcher Geländeformationen kann das Fahrerassistenzsystem bei der Auswahl einer geeigneten Ausweichstrategie im Falle von Gefahr unterstützen. Bei der dargestellten Situation wäre das Verlassen der Straße wegen der steil ansteigenden Hänge mit einem vergleichsweise großen Risiko verbunden. Diese Risikobetrachtung ist immens wichtig für zukünftige Fahrerassistenzsysteme, die auch einen Eingriff in die Lenkung des Fahrzeugs vorsehen.

Die segmentierte Straße erlaubt weiterhin eine exakte Eigenbewegungsbestimmung basierend auf der Flussanalyse. In dem Fahrzeug vorhandene andere Sensoren des Fahrerassistenzsystems können in ihrer Vermessungsgenauigkeit unterstützt werden. So kann beispielsweise bei einem Gierratensensor die Drift kompensiert werden.

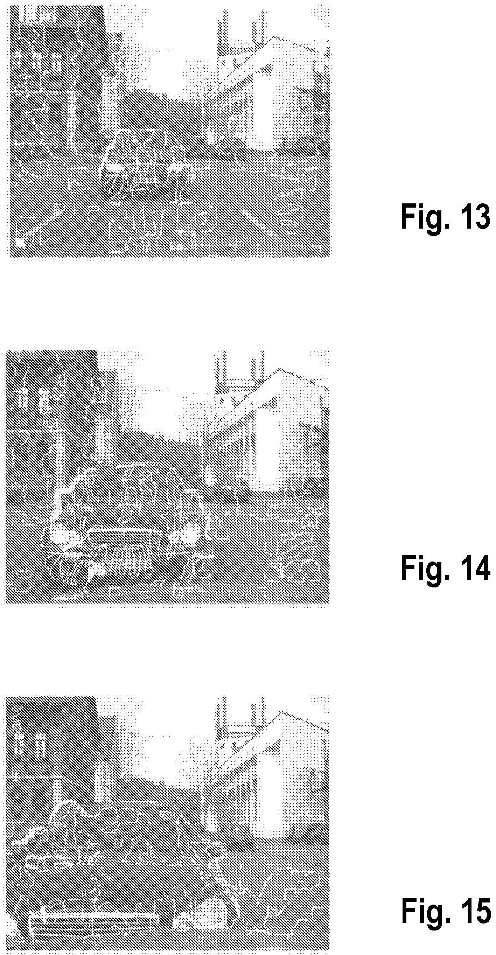

Das erfindungsgemäße Verfahren lässt sich vorteilhaft auch bei Bildsequenzen anwenden, die von seitlich schauenden oder rückschauenden Bildsensoren bereitgestellt werden. Auch eine vorteilhafte Anwendung in Verbindung mit einem Precrashsensor eines Insassenschutzsystems ist denkbar. Figur 13, Figur 14 und Figur 15 zeigen als Beispiel eine von einem Bildsensor 12 gelieferte Bildsequenz, bei der Diskontinuitäten des optischen Flusses auf ein sich dem Egofahrzeug auf Kollisionskurs näherndes Fremdfahrzeug schließen lassen.

## Patentansprüche

1. Verfahren für die Erfassung eines Verkehrsraums mit einem einen monokularen Bildsensor (12) umfassenden Fahrerassistenzsystem (1), wobei von dem monokularen Bildsensor (12) zeitlich aufeinander folgende Bilder (B0, B1, B2, B3) des Verkehrsraums erzeugt werden, in den einzelnen Bildern (B0, B1, B2, B3) der optische Fluss ermittelt wird, der optische Fluss auf Diskontinuitäten untersucht wird und aufgefundene Diskontinuitäten des optischen Flusses Objekten des Verkehrsraums zugeordnet werden, **dadurch gekennzeichnet, dass** aus den erfassten Diskontinuitäten des optischen Flusses die Geländebeschaffenheit neben der Straße abgeleitet wird.

2. Verfahren nach Anspruch 1, **dadurch gekennzeichnet, dass** aus der örtlichen Lage der Diskontinuitäten auf Hindernisse in dem Verkehrsraum geschlossen wird.

3. Verfahren nach Anspruch 1, **dadurch gekennzeichnet, dass** aus einer Veränderung der örtlichen Lage der Diskontinuitäten des optischen Flusses auf ein bewegtes Objekt geschlossen wird.

4. Verfahren nach einem der vorhergehenden Ansprüche, **dadurch gekennzeichnet, dass** erkannte Diskontinuitäten des optischen Flusses für eine Steuerung des Fahrerassistenzsystems und ggf. weiterer bordeigener Systeme benutzt werden.

5. Verfahren nach einem der vorhergehenden Ansprüche, **dadurch gekennzeichnet, dass** Diskontinuitäten des optischen Flusses im Rahmen von Warnstrategien eingesetzt werden.

6. Verfahren nach einem der vorhergehenden Ansprüche, **dadurch gekennzeichnet, dass** aus Diskontinuitäten des optischen Flusses abgeleitete Wamhinweise in ein Fahrerinformationssystem eingespeist werden.

7. Verfahren nach einem der vorhergehenden Ansprüche, **dadurch gekennzeichnet, dass** aus Diskontinuitäten des optischen Flusses abgeleitete Wamhinweise in ein NightviewBild eines Fahrerassistenzsystems eingeblendet werden.

8. Verfahren nach einem der vorhergehenden Ansprüche, **dadurch gekennzeichnet, dass** aus einer Diskontinuität des optischen Flusses abgeleitete Informationen flir die Steuerung eines Insassenschutzsystems verwendet werden.

9. Verfahren nach einem der vorhergehenden Ansprüche, **dadurch gekennzeichnet, dass** aus einer Diskontinuität des optischen Flusses abgeleitete Informationen für die Precrasherkennung eingesetzt werden.

10. Verfahren nach einem der vorhergehenden Ansprüche, **dadurch gekennzeichnet, dass** aus einer Diskontinuität des optischen Flusses abgeleitete Informationen flir die Spurerkennung und Spurführung des Fahrzeugs verwendet werden.

11. Verfahren nach einem der vorhergehenden Ansprüche, **dadurch gekennzeichnet, dass** aus einer Diskontinuität des optischen Flusses abgeleitete Informationen für die Plausibilitätsprüfung von Sensoren bzw. für die Verbesserung ihrer Messgenauigkeit verwendet werden.

## Claims

1. Method for capturing a traffic area using a driver assistance system (1) comprising a monocular image sensor (12), wherein the monocular image sensor (12) generates temporally successive images (B0, B1, B2, B3) of the traffic area, the optical flow is determined in the individual images (B0, B1, B2, B3), the optical flow is examined for discontinuities and discontinuities in the optical flow which are found are assigned to objects in the traffic area, **characterized in that** the nature of the terrain beside the road is derived from the captured discontinuities in the optical flow.

2. Method according to Claim 1, **characterized in that** obstacles in the traffic area are inferred from the local position of the discontinuities.

3. Method according to Claim 1, **characterized in that** a moving object is inferred from a change in the local position of the discontinuities in the optical flow.

4. Method according to one of the preceding claims, **characterized in that** detected discontinuities in the optical flow are used to control the driver assistance system and possibly further on-board systems.

5. Method according to one of the preceding claims, **characterized in that** discontinuities in the optical flow are used within the framework of warning strategies.

6. Method according to one of the preceding claims, **characterized in that** warning notices derived from discontinuities in the optical flow are fed into a driver information system.

7. Method according to one of the preceding claims, **characterized in that** warning notices derived from discontinuities in the optical flow are displayed in a night view image of a driver assistance system.

8. Method according to one of the preceding claims, **characterized in that** information derived from a discontinuity in the optical flow is used to control an occupant protection system.

9. Method according to one of the preceding claims, **characterized in that** information derived from a discontinuity in the optical flow is used for precrash detection.

10. Method according to one of the preceding claims, **characterized in that** information derived from a discontinuity in the optical flow is used for the lane detection and lane guidance of the vehicle.

11. Method according to one of the preceding claims, **characterized in that** information derived from a discontinuity in the optical flow is used to check the plausibility of sensors or to improve their measurement accuracy.

## Revendications

1. Procédé de détection d'un espace de circulation avec un système d'assistance au conducteur (1) comportant un capteur d'image (12) monoculaire, des images (B0, B1, B2, B3) chronologiquement successives de l'espace de circulation étant générées par le capteur d'image (12) monoculaire, le flux optique étant déterminé dans les images (B0, B1, B2, B3) individuelles, le flux optique étant examiné en vue d'y détecter une éventuelle discontinuité et des objets de l'espace de circulation étant associés aux discontinuités trouvées du flux optique, **caractérisé en ce que** la configuration du terrain à côté de la route est dérivée des discontinuités détectées du flux optique.

2. Procédé selon la revendication 1, **caractérisé en ce que** des obstacles dans l'espace de circulation sont déduits de la position locale des discontinuités.

3. Procédé selon la revendication 1, **caractérisé en ce qu'**un objet déplacé est déduit d'une modification de la position locale des discontinuités du flux optique.

4. Procédé selon l'une des revendications précédentes, **caractérisé en ce que** les discontinuités reconnues du flux optique sont utilisées pour une commande du système d'assistance au conducteur et éventuellement d'autres systèmes embarqués propres.

5. Procédé selon l'une des revendications précédentes, **caractérisé en ce que** les discontinuités du flux optique sont utilisées dans le cadre de stratégies d'avertissement.

6. Procédé selon l'une des revendications précédentes, **caractérisé en ce que** les notifications d'avertissement dérivées des discontinuités du flux optique sont injectées dans un système d'information du conducteur.

7. Procédé selon l'une des revendications précédentes, **caractérisé en ce que** les notifications d'avertissement dérivées des discontinuités du flux optique sont affichées en incrustation dans une image de vision nocturne d'un système d'assistance au conducteur.

8. Procédé selon l'une des revendications précédentes, **caractérisé en ce que** les informations dérivées d'une discontinuité du flux optique sont utilisées pour la commande d'un système de protection des passagers.

9. Procédé selon l'une des revendications précédentes, **caractérisé en ce que** les informations dérivées d'une discontinuité du flux optique sont utilisées pour la reconnaissance anticipée d'une collision.

10. Procédé selon l'une des revendications précédentes, **caractérisé en ce que** les informations dérivées d'une discontinuité du flux optique sont utilisées pour la reconnaissance de voie et le guidage sur voie du véhicule.

11. Procédé selon l'une des revendications précédentes, **caractérisé en ce que** les informations dérivées d'une discontinuité du flux optique sont utilisées pour le contrôle de plausibilité de capteurs ou pour l'amélioration de leur précision de mesure.
